# EUROPÄISCHE PATENTANMELDUNG

(11) **EP 2 184 821 A2**
(43) Veröffentlichungstag der Anmeldung: **12.05.2010**
(21) Anmeldenummer: 09013844.7
(22) Anmeldetag: 04.11.2009
(51) Int. Cl.: H02G 3/08

(54) **Abdeckung einer Unterputzdose**

(30) Priorität: 05.11.2008 DE 102008055997
(71) Anmelder: WILO SE, 44263 Dortmund (DE)
(72) Erfinder: Wespel, Ralph, 44141 Dortmund (DE)
(74) Vertreter: COHAUSZ DAWIDOWICZ HANNIG & SOZIEN

(57) **Zusammenfassung**

Die Erfindung betrifft eine Abdeckung für eine Unterputzdose einer Gebäudeelektrik insbesondere eines elektrischen Gebäudenetzwerkes, wobei die Abdeckung eine Aufnahme aufweist, die einen Abschnitt des aus der Unterputzdose austretenden Kabels aufnimmt.

## Beschreibung

Die Erfindung betrifft eine Abdeckung für eine Unterputzdose einer Gebäudeelektrik insbesondere eines elektrischen Gebäudenetzwerkes.

Bei elektrischen Geräten ist die Kabellänge des elektrischen Anschlusses in der Regel vorgegeben und häufig muss die Überlänge des Kabels untergebracht werden, um das Kabel nicht unschön herumliegen zu lassen. Hierzu ist es bekannt, eine Kabeldose zu verwenden, die die überschüssige Kabellänge aufnimmt. Statt der überschüssigen Kabellänge liegt dann eine Kabeldose störend im Weg.

Aufgabe der Erfindung ist es, bei einfacher Konstruktion und Handhabung für ein an einer Unterputzdose angeschlossenes elektrisches Gerät eine flexible Kabelunterbringung zu schaffen, die optisch nicht auffällig ist und räumlich nicht stört.

Diese Aufgabe wird erfindungsgemäß dadurch gelöst, dass die Abdeckung eine Aufnahme aufweist, die einen Abschnitt des aus der Unterputzdose austretenden Kabels aufnimmt.

Eine solche Abdeckung zur Aufnahme eines Kabels insbesondere in Form einer Kabeldose ist unauffällig an einer Unterputzdose befestigbar bei einfacher und leichter Handhabung und bei variabler Kabellänge. Die Abdeckung kann an einer standardisierten Unterputzdose lösbar befestigt werden und bedarf keiner Veränderungen der Unterputzdose oder der daran befindlichen Elektrik oder Elektronik. Hierbei ist die Abdeckung für Kabel unterschiedlichster elektrischer Geräte wie Pumpen, elektrisch gesteuerte Ventile, Telefone, Computer, Computerperipheriegeräte, Mess- und Steuerungsgeräte einsetzbar und ist an die unterschiedlichsten Kabellängen anpassbar, so dass bei großen aufnehmbaren Kabellängen die Außenabmessungen der Abdeckung nur angepasst werden müssen.

Vorteilhafte Ausgestaltungen der Erfindung sind in den Unteransprüchen aufgeführt. Hierbei ist besonders vorteilhaft, wenn die Wickelführung verschieblich insbesondere teleskopförmig am Gehäuseboden gelagert ist und zumindest zu einer Teillänge aus dem Gehäuse herausschiebbar ist, um ein Aufwickeln zu erleichtern. Auch ist von Vorteil, dass eine solche Abdeckung in ihrem Äußeren/Design und Farbton dem Design des Raumes angepasst werden kann, in dem sie verwendet wird.

Ein Ausführungsbeispiel der Erfindung ist in den Zeichnungen perspektivisch dargestellt und wird im Folgenden näher beschrieben. Es zeigen
- Fig. 1: eine Oberansicht der Abdeckung bei abgenommenem Deckel,
- Fig. 2: eine Unteransicht der Abdeckung bei aufgesetztem Deckel,

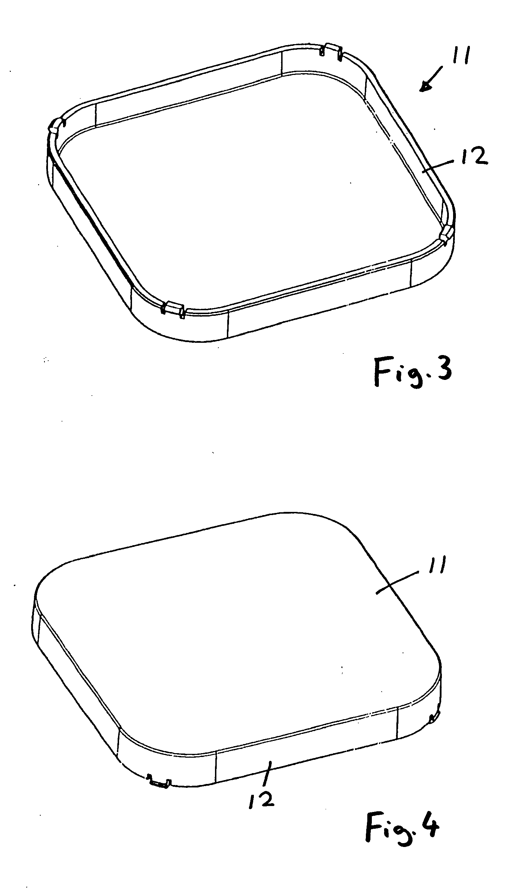

- Fig. 3: eine Unteransicht des Deckels,
- Fig. 4: eine Oberansicht des Deckels.

Die Abdeckung zur Aufnahme eines elektrischen Kabels weist ein insbesondere dosenförmiges Gehäuse 1 auf, das einen quadratischen Boden 2 besitzt mit abgerundeten Ecken 3 und einem am äußeren Rand des Bodens angeformter Gehäusewand 4, die mit im wesentlichen gleich bleibender Höhe den Gehäuseboden 2 ringsum umgibt. Die Höhe H der Wand 4 beträgt hierbei 8 bis 15 mm. Das Innere des Gehäuses 1 bildet damit einen Aufnahmeraum für das Kabel in zusammengelegter insbesondere in gewundener Form.

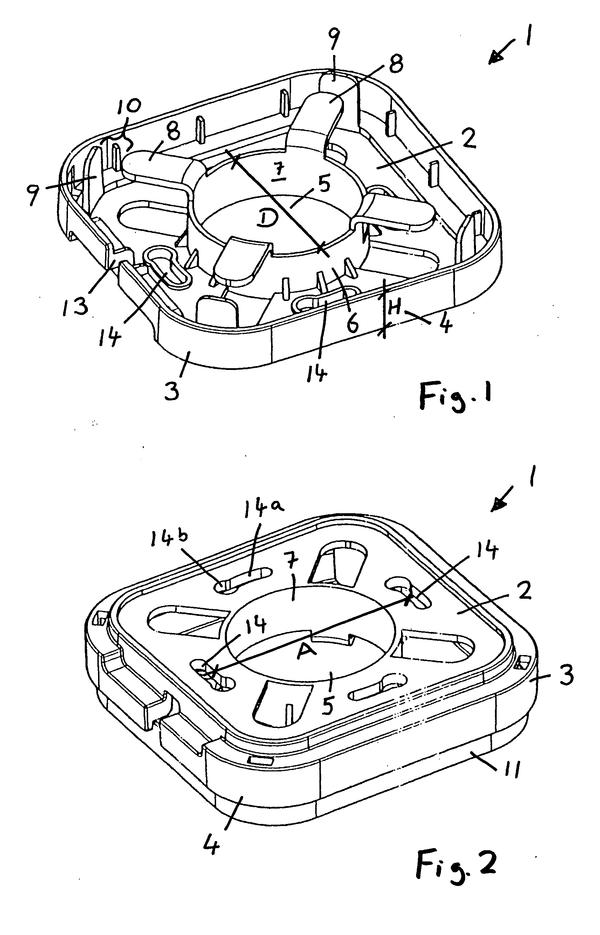

In der Mitte des Bodens 2 befindet sich eine kreisförmige Öffnung 5, an deren Rand eine zylindrische (ringförmige) Wand 6 rechtwinklig angeformt ist, deren Höhe im wesentlichen der Höhe H der Wand 4 entspricht. Die Außenseite der zylindrischen Wand 6 bildet eine Auflage zum Aufwickeln eines nicht dargestellten Kabels insbesondere eines isolierten Elektrokabels, so dass die Wand 6 eine Wickelführung 7 bildet. Hierbei kann die Wand 6 Unterbrechungen aufweisen oder ununterbrochen sein, wie in den Fig. 1 und 2 dargestellt. Ferner muss die zylindrische Wand 6 nicht unbedingt einen kreisförmigen Querschnitt besitzen, sondern kann auch eine ovale oder eckige Form haben.

Am oberen Rand der Wand 6 sind in gleichen Abständen radiale zungenförmige Haltearme 8 angeformt, die parallel zum Gehäuseboden 2 sich radial nach außen erstrecken und sicherstellen, dass der Kabelwickel auf der Wickelführung verbleibt.

Im Bereich der vier Ecken 3 stehen innenseitig in jeder Ecke eine Zunge 9 auf dem Gehäuseboden senkrecht vor, deren freie Enden mit den Enden der Haltearme 8 einen Durchgangsbereich 10 bilden, durch das das Kabel eingeführt wird, wenn es auf die Führung 7 aufgewickelt wird. Hierbei sind die Zungen 9 in ihrer Höhe so gewählt, dass sie gleich oder wenig höher als die Oberseite der Haltearme 8 enden, so dass sie auch über die Gehäusewand 4 hinausstehen und damit Auflagepunkte für einen Deckel 11 bilden, der auf das Gehäuse 1 aufsetzbar ist, um die freie Oberseite des Gehäuses 1 zu verschließen. Hierbei wird in der dargestellten Ausführungsform der am Deckel angeformte vorstehende Außenrand 12 von der Gehäusewand umgriffen, so dass der Außenrand 12 in das Innere des Gehäuses 1 hineinreicht. Alternativ kann aber auch der Außenrand 12 die Gehäusewand 4 des Gehäuses außen umgreifen.

Die Gehäusewand 4 weist zumindest auf einer Seite eine Durchgangsöffnung 13 auf, durch die ein Kabel in das Innere des Gehäuses führbar ist. Das Kabel wird auf die Wickelführung 7 mit so vielen Windungen aufgewickelt wie eine bestimmte Kabellänge nicht benötigt wird. Hierbei wird das Kabel durch die Bereiche 10 zwischen Arm 8 und Zunge 9 hindurchgeführt und die Arme 8 sorgen dafür, dass die Windungen des Kabelwickels auf der Wickelführung 7 sicher verbleiben, ohne abzurutschen. Der Anfang des Kabels wird durch die Öffnung 5 hindurchgeführt, um zum Inneren einer nicht dargestellten Unterputzdose zu gelangen, auf der die Abdeckung bzw. die Kabeldose mit ihrem Gehäuse 1 befestigt ist.

Als Befestigungsmittel zur lösbaren Befestigung des Gehäuses 1 an der Unterputzdose weist der Gehäuseboden 2 als Befestigungsstellen zumindest zwei Befestigungsöffnungen 14 auf. Im gezeichneten Ausführungsbeispiel befinden sich im Gehäuseboden 2 zwei Paare von Befestigungsöffnungen 14 auf diametral gegenüberliegenden Seiten zur Öffnung 5 bzw. zur Wickelführung 7, wobei der diametrale Abstand A zweier Befestigungsöffnungen 14 voneinander größer ist als der Durchmesser D der Wickelführung.

Jede Befestigungsöffnung 14 weist ein gebogenes Langloch 14a auf, das an einem seiner Enden eine kreisförmige Erweiterung 14b besitzt, deren Innendurchmesser etwas größer gewählt ist als der Durchmesser des Kopfes einer Schraube, die als Befestigungsmittel am Rand der Unterputzdose eingeschraubt ist. Beim Befestigen des Gehäuses 1 an einer Unterputzdose wird die Abdeckung mit ihrem Gehäuseboden 2 so auf die Unterputzdose gesetzt, dass zwei Schrauben der Unterputzdose mit ihren Köpfen durch die Langlöcher 14a zweier Öffnungen 14 so weit hindurchreichen, dass die Köpfe der Schrauben den oberen Rand der Öffnung 14 überragen. Danach wird das Gehäuse 1 um seine mittlere Achse um einige Grad verdreht, so dass dann die Köpfe der Befestigungsschrauben im Bereich der Langlöcher 14a liegen und deren Ränder übergreifen. Damit bilden die zwei Schrauben der Unterputzdose zusammen mit zwei Öffnungen 14 der Abdeckung eine lösbare Renkverbindung.

Statt einer Befestigung mit Schrauben können auch andere Befestigungsmittel verwendet werden, wie Rast- oder Klemmverbindungen zwischen der Unterputzdose und der Kabelaufnahmevorrichtung bzw. der Kabeldose.

In einer nicht dargestellten Ausführung ist die Wickelführung 7 am Gehäuseboden 2 nicht angeformt, sondern teleskopförmig verschieblich gelagert, so dass innerhalb der Wickelführung 7 ein am Gehäuseboden 2 angeformter Ring angeordnet ist, auf dem die Wickelführung 7 axial verschieblich liegt. Damit kann die Wickelführung 7 bis zu einem Anschlag aus dem Gehäuseinneren um mehrere Millimeter herausgezogen werden, um ein Aufwickeln des Kabels auf die Wickelführung von Hand zu erleichtern. In einer weiteren Alternative ist die Wickelführung aus dem Gehäuse 1 herausnehmbar, wobei die Wickelführung entweder lose im Gehäuse einliegt oder am Gehäuse insbesondere am Boden 2 lösbar befestigt insbesondere angesteckt ist.

Ferner können in einer weiteren nicht dargestellten Ausführung in der Gehäusewand 4 mehrere Durchgangsöffnungen 13 auf verschiedenen Seiten angeordnet sein, um an verschiedenen Stellen das Kabel aus der Abdeckung herausführen zu können.

In einer weiteren nicht dargestellten Ausführung sind in oder an dem Gehäuse 1 Sensoren insbesondere zum Erfassen von Raumdaten angeordnet. Ferner ist besonders vorteilhaft, wenn die Abdeckung/Dose zum Aufwickeln eines Kabels verwendet wird, das zur Spannungsversorgung und/oder zur Datenübertragung zu einer insbesondere Sensoren aufweisenden Pumpe benutzt wird. Hierbei ist ein Ende des Kabels mit der Pumpe oder einer Vorrichtung zum Erfassen und/oder Steuern insbesondere Regeln der Temperatur eines Raumes und das andere Ende mit der Unterputzdose verbunden.

Der Boden 2 des Gehäuses 1 deckt die Oberseite der Unterputzdose vollständig ab, wobei die Form und Außenabmessungen des Gehäuses und insbesondere des Bodens 2 der Form und den Außenabmessungen der Unterputzdose entsprechen, oder die Abdeckung mit ihrem Gehäuseboden 2 und/oder Seitenwand die Unterputzdose seitlich ringsum überragt.

Besonders wichtig ist hierbei
- dass die Aufnahme einen Raum aufweist in zusammengelegter insbesondere gewundener Form,
- dass die Befestigungsöffnungen 14 im Gehäuseboden 2 einander diametral gegenüberliegend zur Wickelführung 7 angeordnet sind,
- dass der diametrale Abstand A der Befestigungsöffnungen 14 voneinander größer ist als der Durchmesser D der Wickelführung 7,
- dass zwei oder vier Befestigungsöffnungen 14 die Wickelführung 7 paarweise umgeben,
- dass die Gehäusewand 4 auf zwei, drei oder vier Seiten jeweils eine Durchgangsöffnung 13 für das Kabel aufweist,
- dass auf der Gehäuseinnenseite am Gehäuseboden 2 Zungen 9 senkrecht vorstehen, deren Enden mit den Enden der Haltearme 8 einen Durchgangsbereich 10 für Kabelschlaufen bilden,
- dass das obere Ende der Zungen 9 eine Auflagefläche für den Gehäusedeckel 11 bilden,
- dass sie in ihren Abmessungen die Unterputzdose abdeckt, und
- dass sie mit ihrem Gehäuseboden 2 und/oder Seitenwand die Unterputzdose seitlich ringsum überragt.

## Patentansprüche

1. Abdeckung für eine Unterputzdose einer Gebäudeelektrik insbesondere eines elektrischen Gebäudenetzwerkes, **dadurch gekennzeichnet, dass** die Abdeckung eine Aufnahme (7) aufweist, die einen Abschnitt des aus der Unterputzdose austretenden Kabels aufnimmt.

2. Abdeckung nach Anspruch 1, **dadurch gekennzeichnet, dass** die Aufnahme eine Wickelführung (7) aufweist zur Aufnahme des eine elektrische Spannung und/oder Daten übertragenden Kabels in Form eines Wickels.

3. Abdeckung nach Anspruch 1 oder 2, **dadurch gekennzeichnet, dass** die Aufnahme (7) von einem Gehäuse (1) insbesondere in Form einer Dose umgeben ist.

4. Abdeckung nach Anspruch 2 oder 3, **dadurch gekennzeichnet,**
**dass** die Wickelführung (7) auf dem Gehäuseboden (2) befestigt ist insbesondere lösbar durch eine Steckverbindung.

5. Abdeckung nach einem der vorherigen Ansprüche, **dadurch**
**gekennzeichnet, dass** zur lösbaren Befestigung insbesondere an der Vorderseite der Unterputzdose im Gehäuseboden (2) mindestens zwei Befestigungsstellen (14) sind, deren Abstand voneinander dem Abstand der Befestigungsmittel insbesondere den Schrauben der Unterputzdose entspricht.

6. Abdeckung nach Anspruch 5, **dadurch gekennzeichnet, dass**
die Befestigungsstellen (14) ein gebogenes Langloch (14a) aufweisen, das an einem Ende eine Erweiterung (14b) besitzt, deren Innendurchmesser so groß gewählt ist, dass der Kopf einer Schraube der Befestigungsmittel der Unterputzdose hindurchpasst, wobei die Befestigungsöffnung (14) und die Schraube der Unterputzdose eine Renkverbindung bilden, wobei nach Einführung des Schraubenkopfes durch die Langloch-Erweiterung (14b) und nach Verdrehen der Vorrichtung der Schraubenkopf den Rand des Langlochs (14a) übergreift.

7. Abdeckung nach einem der Ansprüche 2 bis 6, **dadurch gekennzeichnet, dass** die Wickelführung (7) eine im wesentlichen zylindrische unterbrochene oder ununterbrochene insbesondere ringförmige Wand (6) aufweist, die am Gehäuseboden (2) befestigt insbesondere angeformt ist und auf der der Kabelwickel außen aufliegt und dass die Wickelführung (7) eine Öffnung (5) im Gehäuseboden (2) umgibt, durch die das Kabel führbar ist

8. Abdeckung nach einem der Ansprüche 3 bis 7, **dadurch gekennzeichnet, dass** die Gehäusewand (4) den Außenrand des Gehäusebodens (2) umgibt und mindestens eine Durchgangsöffnung (13) für das Kabel aufweist.

9. Abdeckung nach einem der Ansprüche 2 bis 8, **dadurch gekennzeichnet, dass** am oberen Rand der Wand (6) der Wickelführung (7) zungenförmige Haltearme (8) angeformt sind, die im wesentlichen parallel zum Gehäuseboden (2) sich insbesondere radial nach außen erstrecken, um ein Abrutschen des Kabelwickels von der Wickelführung (7) zu verhindern.

10. Abdeckung nach einem der Ansprüche 2 bis 9, **dadurch**
**gekennzeichnet, dass** die Wickelführung (7) verschieblich insbesondere teleskopförmig am Gehäuseboden (2) gelagert ist und zumindest zu einer Teillänge aus dem Gehäuse herausschiebbar ist, um ein Aufwickeln zu erleichtern.

11. Abdeckung nach einem der Ansprüche 2 bis 10, **dadurch**
**gekennzeichnet, dass** die offene Seite des Gehäuses (1) durch einen aufsetzbaren flachen Deckel (11) verschließbar ist, dessen Außenrand (12) von der Gehäusewand (4) zumindest teilweise umgriffen ist oder dessen Außenrand die Gehäusewand zumindest teilweise umgreift.

12. Abdeckung nach einem der Ansprüche 2 bis 11, **dadurch**
**gekennzeichnet, dass** in oder an dem Gehäuse (1) Sensoren insbesondere zum Erfassen von Raumdaten angeordnet sind.

13. Verwendung einer Abdeckung nach einem der vorherigen Ansprüche zur Aufnahme eines elektrischen Kabels zwischen einer Spannungsquelle insbesondere einer Unterputzdose und einer Pumpe.

14. Verwendung einer Abdeckung nach einem der vorherigen Ansprüche zur Aufnahme eines elektrischen Kabels, das Daten zur und/oder von einer insbesondere Sensoren aufweisenden Pumpe überträgt.

15. Verwendung einer Abdeckung nach einem der vorherigen Ansprüche zur Aufnahme eines elektrischen Kabels, das zu einer Vorrichtung zum Erfassen und/oder Steuern insbesondere Regeln der Temperatur eines Raumes führt.
